# EUROPÄISCHE PATENTSCHRIFT

(11) **EP 2 001 708 B1**
(45) Veröffentlichungstag und Bekanntmachung des Hinweises auf die Patenterteilung: **20.07.2011**
(21) Anmeldenummer: 07703223.3
(22) Anmeldetag: 02.02.2007
(51) Int. Cl.: B60N 2/46, B60N 3/00, B64D 11/06

(54) **AUSLÖSEVORRICHTUNG FÜR EIN TISCHTEIL EINES SITZSYSTEMES FÜR FAHRZEUGE ZUR PERSONENBEFÖRDERUNG**
RELEASING DEVICE FOR A TABLE PART OF A SEAT SYSTEM FOR PASSENGER VEHICLES
DISPOSITIF DE DECLENCHEMENT D'UN ELEMENT TABLETTE D'UN SYSTEME DE SIEGE POUR VEHICULES DE TRANSPORT DE PERSONNES

(30) Priorität: 01.04.2006 DE 102006015180
(43) Veröffentlichungstag der Anmeldung: 17.12.2008
(73) Patentinhaber: Recaro Aircraft Seating GmbH & Co. KG, 74523 Schwäbisch Hall (DE)
(72) Erfinder: SCHUMM, Klaus, 74523 Schwäbisch Hall (DE); KLEIN, Gerhard, 74523 Schwäbisch Hall (DE); MISKOVIC, Branislav, 74523 Schwäbisch Hall (DE); SCHWARZ, Oliver, 74523 Schwäbisch Hall (DE)
(74) Vertreter: Daub, Thomas
(86) Internationale Anmeldenummer: PCT/EP2007/000894
(87) Internationale Veröffentlichungsnummer: WO 2007/118534

(56) Entgegenhaltungen:
- EP-A1- 0 530 920
- WO-A-2005/061322
- FR-A1- 2 841 510
- US-A- 3 506 304
- US-A- 4 533 175
- US-A1- 2004 046 430

## Beschreibung

Die Erfindung bezieht sich auf eine Auslösevorrichtung für ein Tischteil eines Sitzsystemes für Fahrzeuge zur Personenbeförderung, insbesondere für Luftfahrzeuge. Eine solche Auslösevorrichtung ist bekannt aus der Patentschrift US 4,533,175 A1, die den nächstliegenden Stand der Technik darstellt und den Oberbegriff des 1. Anspruchs offenbart.

Im Hinblick auf die ausgedehnte Reisedauer, die sich für den Passagier bei bestimmten Fahrzeugen, insbesondere Luftfahrzeugen oder Fährschiffen, ergeben kann, geht das Bestreben dahin, die Sitzkomponenten der Sitzsysteme derart auszubilden, dass sich für den Passagier ein besonders guter Komfort ergibt. Es ist daher üblich, für bestimmte Sitzkomponenten die Möglichkeit einer Lageeinstellung zu bieten, damit der Passagier diese Komponenten, etwa Rückenlehne und Armlehnen, seinen persönlichen Bedürfnissen anpassen kann. Auch ist es üblich, dem Passagier eine Abstellmöglichkeit in Form eines Tischteiles zur Verfügung zu stellen. Aufgrund des bei Kabinen derartiger Fahrzeuge zur Verfügung stehenden, verhältnismäßig geringen Raumangebots ist es jedoch erforderlich, für das Tischteil eine Verstaumöglichkeit vorzusehen, so dass das Tischteil lediglich in einer näherungsweise horizontalen Gebrauchsstellung einen entsprechenden Kabinenraum beansprucht, bei Nichtgebrauch aus der Gebrauchsstellung jedoch in eine Verstaustellung gebracht werden kann, in dem es keine Beengung des dem betreffenden Sitzsystem zur Verfügung stehenden Freiraumes darstellt.

Die Vorteile, die sich für den Passagier durch die gebotene Möglichkeit der Benutzung des Tischteiles ergeben, müssen seitens des Passagiers jedoch mit dem Nachteil erkauft werden, dass er gezwungen ist, entsprechende Steuer- und/oder Einstelleinrichtungen zu betätigen, um das Überführen des Tischteiles zwischen den vorgesehenen Stellungen zu bewirken.

Im Hinblick hierauf stellt sich die Erfindung die Aufgabe, eine Auslösevorrichtung zur Verfügung zu stellen, die dem Passagier eine besonders einfache und bequeme Nutzung des Tischteiles ermöglicht.

Gemäß der Erfindung ist diese Aufgabe durch eine Auslösevorrichtung gelöst, die die Merkmale des Patentanspruches 1 in seiner Gesamtheit aufweist.

Die Erfindung wird dabei auf Sitzsysteme angewendet, bei denen eine Sitzreihe mit nebeneinander liegenden Sitzen vorgesehen ist, wobei das Tischteil an der Rückenlehne eines zwischen zwei Sitzen gelegenen mittleren Sitzes so angebracht ist, dass es durch die Verriegelungseinrichtung in einer am Anlehnbereich der Rückenlehne gelegenen Verstaustellung festgelegt und bei Ansteuerung der Verriegelungseinrichtung in seine vom Anlehnbereich entfernte Gebrauchsstellung schwenkbar ist, in der es eine zumindest näherungsweise horizontale Tischfläche bildet.

Danach besteht die Besonderheit der Erfindung darin, dass die Bewegung einer lageeinstellbaren Armlehne als Steuerfunktion ausgenutzt wird, um eine das Tischteil in der-Verstaustellung festlegende Verriegelungseinrichtung so anzusteuern, dass das Tischteil zum Überführen in die Gebrauchsstellung freigegeben wird. Die Betätigung gestaltet sich für den Passagier äußerst einfach und bequem, weil die für die Steuerfunktion zu bewegende, lageeinstellbare Armlehne im unmittelbaren Zugriff des Passagiers gelegen und damit einfach und bequem erreichbar ist.

Vorzugsweise weist die Verriegelungseinrichtung ein Riegelglied auf, das zwischen Sperrstellung, in der es mit dem in Verstaustellung befindlichen Tischteil verrastbar ist, und Freigabestellung bewegbar ist, wobei eine Vorspanneinrichtung vorgesehen ist, die das Riegelglied für eine Bewegung in die Sperrstellung vorspannt, und wobei eine Koppeleinrichtung vorhanden ist, die die Bewegung der lageeinstellbaren Armlehne bei deren Überführen in eine Auslöseposition in eine gegen die Vorspannung erfolgende Bewegung des Riegelgliedes in dessen Freigabestellung umsetzt. Dadurch, dass das Riegelglied normalerweise in die Sperrstellung vorgespannt ist, ergibt sich zum einen die Möglichkeit eines konstruktiv einfachen Aufbaus der Koppeleinrichtung, weil diese lediglich eine gegen die Vorspannkraft erfolgende Stellbewegung in einer Richtung, nämlich zur Freigabestellung hin, erzeugen muss. Zum anderen erfolgt aufgrund der Vorspannung in die Sperrstellung das selbsttätige Verrasten des Tischteiles in der Verstaustellung.

Bei besonders vorteilhaften Ausführungsbeispielen weist die Koppeleinrichtung ein sich zwischen Verriegelungseinrichtung und lageeinstellbarer Armlehne erstreckendes Zugglied auf, über das auf das Riegelglied eine Zugkraft übertragbar ist, die dieses gegen die Vorspannung aus der Sperrstellung in die Freigabestellung zieht. Die Verwendung eines Zuggliedes ermöglicht eine besonders einfache, betriebssichere und leichtgewichtige Bauweise der Koppeleinrichtung.

Die letztgenannten Vorteile sind insbesondere dann gegeben, wenn als Zugglied ein Bowdenzug vorgesehen ist.

Hierbei kann die Anordnung vorzugsweise so getroffen sein, dass zumindest eine zwischen Mantel und Seele des Bowdenzuges wirksame Federanordnung die Vorspannkraft erzeugt, die das Riegelglied der Verriegelungseinrichtung normalerweise in die Sperrstellung steuert. Hierbei ergibt sich eine besonders raumsparende Bauweise.

Bei bevorzugten Ausführungsbeispielen ist als Bestandteil der Koppeleinrichtung zwischen der Seele des Bowdenzuges und einem bei der Lageeinstellung der Armlehne bewegten Traghebel derselben eine Kupplungseinrichtung vorhanden. Durch entsprechende Gestaltung dieser Kupplungseinrichtung lassen sich gewünschte, unterschiedliche Weglängen der Stellbewegungen erreichen, die vom Traghebel der Armlehne bei dessen Einstellbewegung beziehungsweise von der Seele des Bowdenzuges für das Ansteuern der Verriegelungseinrichtung zurückgelegt werden.

Bei einer besonders vorteilhaften Ausführungsform weist die Kupplungseinrichtung einen bei der Lageeinstellung der Armlehne geradlinig verschiebbaren Mitnehmer und einen schwenkbaren Winkelhebel auf, dessen einer Hebelarm durch die Verschiebebewegung des Mitnehmers schwenkbar ist und über dessen anderen Hebelarm bei der durch den Mitnehmer bewirkten Schwenkbewegung eine Zugkraft auf die Seele des Bowdenzuges übertragbar ist. Bei solchen Ausführungsbeispielen lassen sich gewünschte, unterschiedliche Weglängen auch durch die Wahl der jeweiligen Längen der Hebelarme des Winkelhebels verwirklichen.

In besonders vorteilhafter Weise können Mitnehmer und zugeordneter Hebelarm des Winkelhebels in solcher Lagebeziehung zueinander angeordnet sein, dass der Mitnehmer im Zuge seiner Verschiebebewegungen den Hebelarm überläuft und diesen für eine vom Mitnehmer unabhängige, durch die an der Seele des Bowdenzuges wirkende Vorspannung bewirkte Schwenkbewegung freigibt.

Bei Sitzreihen, bei denen ein mittlerer Sitz zwischen zwei weiteren Sitzen gelegen ist und sämtliche dieser Sitze die gleiche durch Armlehnen begrenzte Sitzbreite aufweisen, die zum Beispiel der Sitzbreite der Economy-Class der Verkehrsluftfahrt entspricht, besteht die besonders vorteilhafte Möglichkeit, aus einer Dreiergruppe der Sitze eine Zweiergruppe mit nur zwei Sitzen zu machen, deren entsprechend größere Sitzbreite dem Standard der Business-Class entspricht. Eine solche Umrüstung kann in der Weise erfolgen, dass beide an den mittleren Sitz angrenzenden Armlehnen zwischen einer ersten Position, die den drei nebeneinander liegenden Sitzen jeweils einander angeglichene Sitzbreiten zur Verfügung stellt, und einer Auslöseposition lageeinstellbar sind, in der diese Armlehnen zur Vergrößerung der Sitzbreite der beiden außenliegenden Sitze aneinander angenähert sind, wobei die Verriegelungseinrichtung der erfindungsgemäßen Auslösevorrichtung in Abhängigkeit vom Überführen zumindest einer dieser Armlehnen in die Auslöseposition ansteuerbar ist. Dadurch wird erreicht, dass beim Umrüsten vom Economy-Class-Standard zum Business-Class-Standard selbsttätig die Entriegelung des Tischteiles erfolgt, so dass es in seiner Gebrauchsstellung zwischen seitlich an ihn angrenzenden Business-Class-Sitzen beispielsweise als Cocktailtisch zu benutzen ist.

Eine besonders vorteilhafte Gestaltung ergibt sich hierbei, wenn die lageeinstellbaren Armlehnen in der Weise lageeinstellbar sind, dass sie sich in der Auslöseposition entlang der näherungsweise horizontalen Seitenränder des in der Gebrauchsstellung befindlichen Tischteiles erstrecken.

Eine besonders hohe Bedienungsbequemlichkeit ergibt sich, wenn für das an der Sitzstruktur schwenkbar gelagerte Tischteil ein Kraftantrieb vorgesehen ist, der am Tischteil eine Stellkraft erzeugt, die das in der Verstaustellung festgelegte Tischteil bei Ansteuerung der Verriegelungseinrichtung in Richtung auf die Gebrauchsstellung zu schwenken sucht. Bei Betätigen der lageeinstellbaren Armlehne, beispielsweise bei der Umrüstung von Economy-Class zu Business-Class erfolgt dadurch nicht nur eine selbsttätige Entriegelung der Tischeinheit, sondern auch die Einleitung einer Schwenkbewegung des Tischteiles in Richtung auf die Gebrauchsstellung hin.

Nachstehend ist die Erfindung anhand eines in der Zeichnung dargestellten Ausführungsbeispieles im Einzelnen erläutert. Es zeigen:
- Fig. 1 eine perspektivisch Schrägansicht lediglich einiger für das Verständnis der Erfindung wesentlicher Strukturelemente eines mit einem Ausführungsbeispiel der erfindungsgemäßen Auslösevorrichtung versehenen Sitzsystemes, wobei ein Tischteil in seiner Gebrauchsstellung gezeigt ist;
- Fig. 2 eine gegenüber Fig. 1 vergrößert und abgebrochen gezeichnete Teil-Vorderansicht nur des oberen Bereiches der Rückenlehnenstruktur, wobei das Tischteil mittels einer Verriegelungseinrichtung in seiner Verstaustellung festgelegt ist;
- Fig. 3 eine stark schematisch vereinfacht und perspektivisch gezeichnete Rückansicht lediglich des mittleren Bereiches einer Sitzreihe, versehen mit einem Ausführungsbeispiel der erfindungsgemäßen Auslösevorrichtung, wobei lediglich die wesentlichen Strukturelemente, teilweise abgebrochen und ohne Verkleidung, dargestellt sind;
- Fig. 4 eine gegenüber Fig. 3 in größerem Maßstab und schematisch vereinfacht gezeichnete Rückansicht einer lageeinstellbaren Armlehne des Sitzsystemes von Fig. 3 mit zugehöriger Lageeinstelleinrichtung;
- Fig. 5 eine perspektivisch und abgebrochen gezeichnete Vorderansicht, gesehen auf die in Fig. 4 gezeigte Lageeinstelleinrichtung und gesehen auf eine Kupplungseinrichtung als Bestandteil der erfindungsgemäßen Auslösevorrichtung, wobei die Kupplungseinrichtung in einem Betriebszustand gezeigt ist, der sich bei der Einstellbewegung einer lageeinstellbaren Armlehne in die Auslöseposition ergibt, und
- Fig. 6 eine der Fig. 5 entsprechende Darstellung, wobei die Kupplungseinrichtung in dem Betriebszustand gezeigt ist, der sich nach Durchführen der Einstellbewegung der verstellbaren Armlehne in die Auslöseposition ergibt.

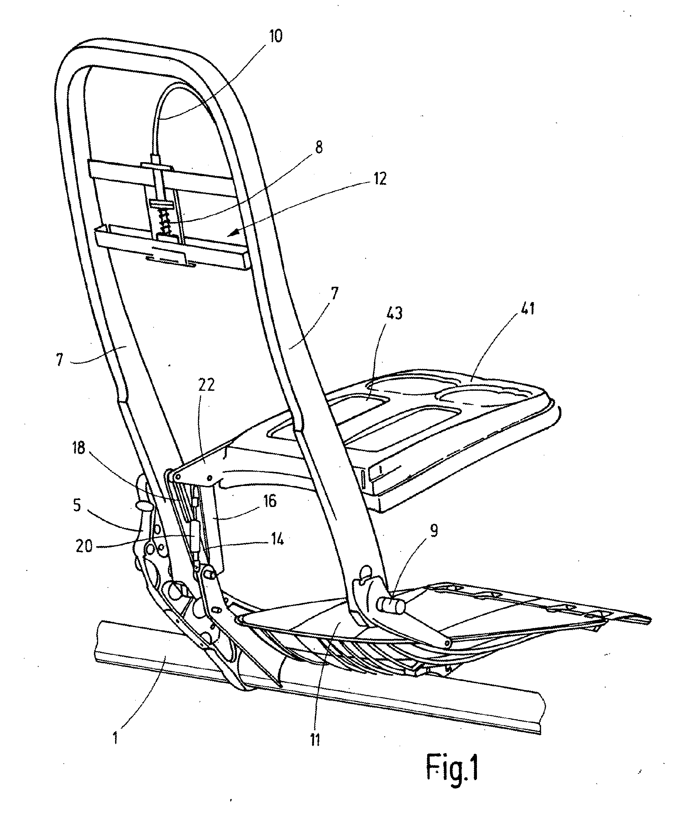

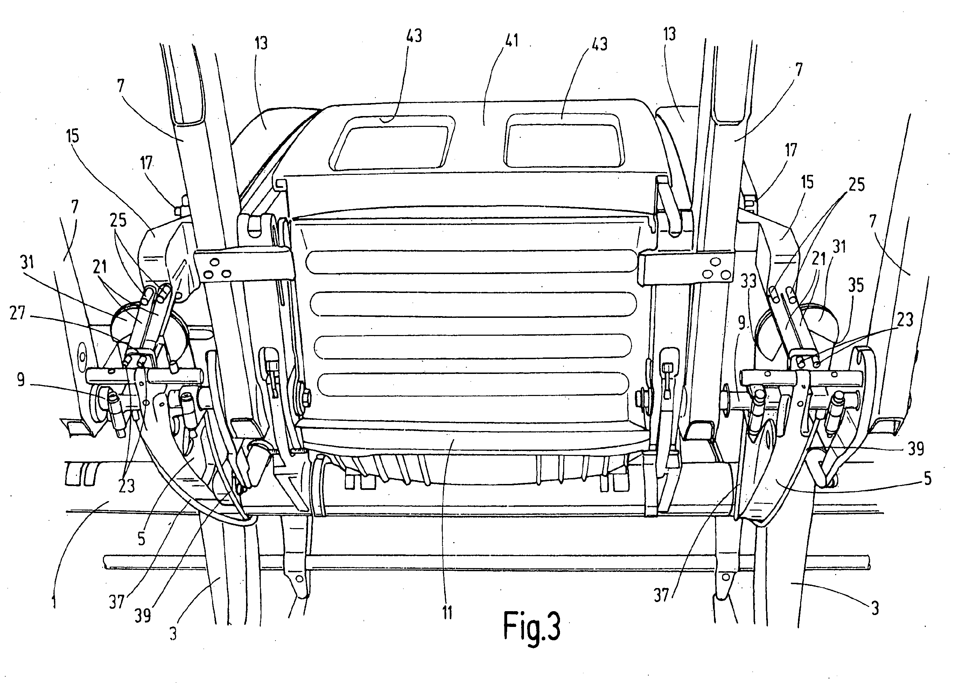

In Fig. 1 und 3 ist ein Tischteil 41 jeweils in seiner Gebrauchsstellung dargestellt, in der es mit einer seiner Großflächen eine annähernd horizontale (bezogen auf die normale Einbaulage des Sitzsystems) Tischfläche 43 bildet. Diese erstreckt sich, ausgehend vom Bereich einer Rückenlehne, von der lediglich das Lehnengestell mit Holmen 7 dargestellt ist, zwischen Armlehnen 13 (Fig. 3) in Reiserichtung (Flugrichtung) nach vorn, wobei die Längserstreckung der Tischfläche 43 beim gezeigten Beispiel bis zum vorderen Endbereich der Armlehnen 13 reicht. Aus der in Fig. 1 und 3 gezeigten Gebrauchsstellung ist das Tischteil 41 in eine Verstaustellung überführbar, in der es, zwischen den Holmen 7 der Rückenlehne liegend, mit seiner der Tischfläche 43 entgegengesetzten Großfläche, die als Polsterfläche ausgebildet ist, einen Teil des Anlehnbereiches der Rückenlehne bildet.

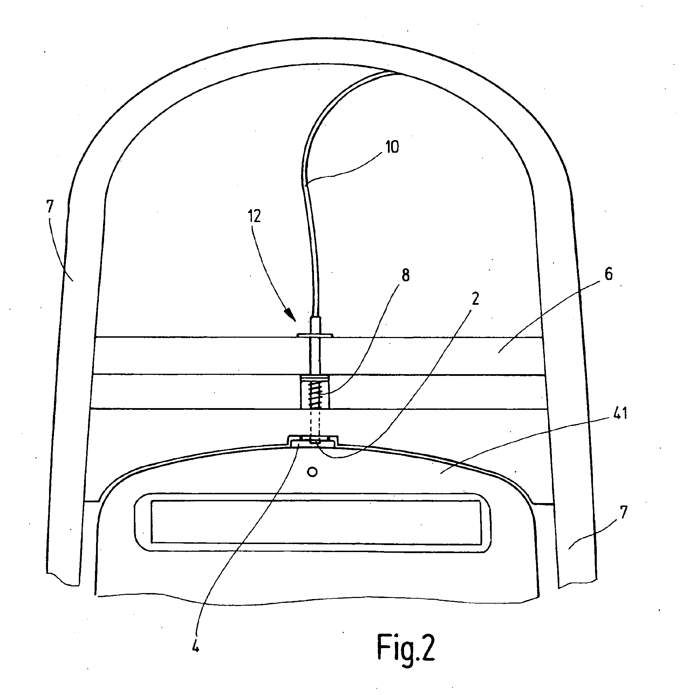

Bei der in Fig. 2 gezeigten Verstaustellung ist ein bolzenartiges, zwischen Sperrstellung und Freigabestellung längs verschiebbares Riegelglied 2 in seiner vorgeschobenen Sperrstellung dargestellt, in der es zur Festlegung des Tischteiles 41 in der Verstaustellung mit einer am vorderen Endrand des Tischteiles 41 befindlichen Raste 4 in Eingriff ist. Das Riegelglied 2, das Teil einer als Ganzes mit 12 bezeichneten Verriegelungseinrichtung bildet, ist an einem Querträger 6, der die Holme 7 verbindet, verschiebbar gelagert und mittels einer Schraubenfeder 8 in Richtung auf die Sperrstellung hin vorgespannt. Aus der Sperrstellung ist das Riegelglied 2 mittels eines Bowdenzuges 10 gegen die Kraft der Feder 8 zurückziehbar. Der Bowdenzug 10 bildet Bestandteil einer Koppeleinrichtung, die die Bewegung einer lageeinstellbaren Armlehne 13 in eine Auslöseposition in eine gegen die Vorspannung erfolgende Bewegung des Riegelgliedes 2 in seine Freigabestellung umsetzt.

Für seine Einstelibewegungen zwischen Verstaustellung und Gebrauchsstellung ist das Tischteil 41 mit der festen Sitzstruktur, also mit Strukturelement 5 und Tragholm 1, über ein Hebelgetriebe 14 gekoppelt, das aus einem aus zwei Gelenkhebeln 16 und 18 bestehenden Hebelpaar gebildet ist und dem ein Kraftantrieb in Form einer Gasdruckfeder 20 zugeordnet ist. Durch Wahl der Hebellängen sowie der Anlenkstellen an einer Tischträgerplatte 22 ist das Hebelgetriebe 14 so gestaltet, dass die Gasfeder 20 bei in der Verstaustellung befindlichem Tischteil 41 ein Schwenkmoment erzeugt, das das Tischteil 41 in Richtung auf die Gebrauchsstellung zu schwenken sucht. Dadurch wird das Tischteil 41 bei Ansteuerung der Verriegelungseinrichtung 12 in den Freigabezustand zunächst bis zu einer Zwischenstellung nach unten geschwenkt, bei welcher Zwischenstellung das Hebelgetriebe 14 einen zustand der Überzenterung erreicht. Wird aus dieser Zwischenstellung das Tischteil 41 weiter gegen die Gebrauchsstellung hin geschwenkt, erzeugt die Gasfeder 20 nach Überlaufen der Überzenterung ein Schwenkmoment, das das Tischteil 41 in die Gebrauchsstellung schwenkt.

Fig. 3 zeigt das Tischteil 41 in der Gebrauchsstellung, die durch eine nicht gezeigte Anschlageinrichtung definiert ist, wobei sich die lageeinstellbaren Armlehnen 13 in ihrer Auslöseposition entlang der Seitenränder des in der Gebrauchsstellung befindlichen Tischteiles 41 erstrecken.

Fig. 3 zeigt den mittleren Bereich einer Sitzreihe mit drei nebeneinander liegenden Sitzen, wobei ein sich in Sitzquerrichtung erstreckender Tragholm 1 einen Hauptbestandteil der Tragstruktur bildet, die über Ständerbeine 3 auf einem nicht gezeigten Kabinenboden aufgeständert ist. An mit dem Tragholm 1 verbundenen Strukturelementen 5 sind die Rückenlehnenholme 7 an Neigungsachsen 9 zur Einstellung der Rückenlehnenneigung schwenkbar gelagert. Eine auf der Tragstruktur gelagerte Sitzschale des mittleren Sitzes ist mit 11 bezeichnet.

Von den zur Sitzreihe gehörenden Armlehnen sind in der Zeichnung lediglich die dem mittleren Sitz benachbarten, lageeinstellbaren Armlehnen 13 sichtbar. Diese Armlehnen 13 sind in Fig. 3 in einer Einstellposition gezeigt, die der Auslöseposition entspricht und in der sie voneinander den geringsten, in Sitzquerrichtung gemessenen Abstand aufweisen. Diese Einstellposition, die im vorliegenden Text als "Auslöseposition" bezeichnet ist, entspricht dem Betriebszustand der Sitzreihe, bei dem die Sitzbreite beider außenliegenden Sitze vergrößert ist, wobei also eine Sitzreihe mit ursprünglich drei Sitzen in eine Sitzreihe mit zwei Sitzen überführt ist, zwischen denen sich kein mittlerer Sitz, sondern ein anderweitig nutzbarer Zwischenraum befindet.

Jede lageeinstellbare Armlehne 13 ist an einem Armlehnenträger 15 angeordnet, der die Form eines abgekröpften Armes besitzt, an dessen einem Endbereich die eigentliche Armlehne an einem Klappgelenk 17 so gelagert ist, dass sie aus einer näherungsweise horizontalen Gebrauchslage zur (nicht gezeigten) Rückenlehne hochklappbar ist.

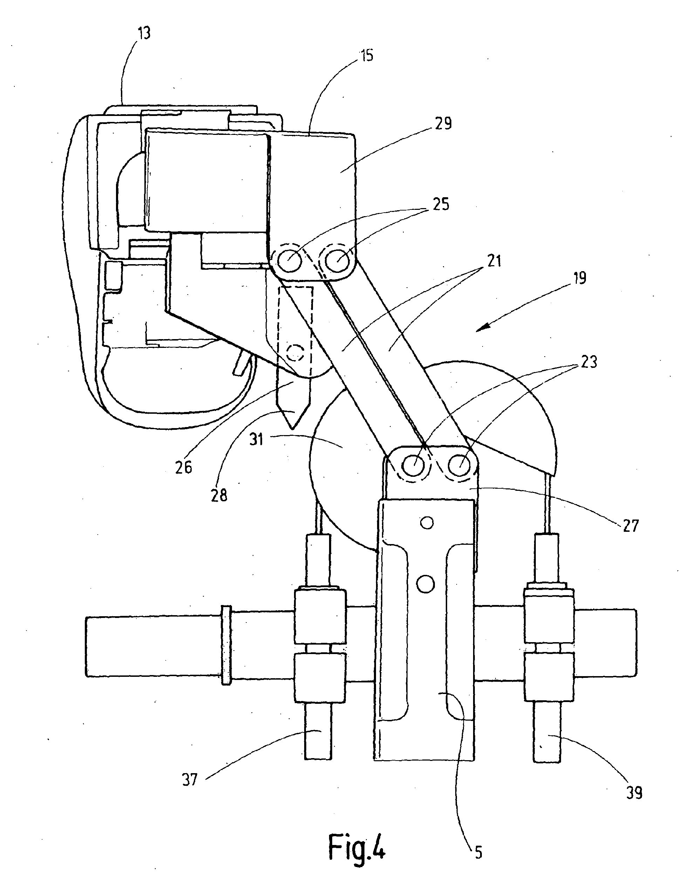

Der Armlehnenträger 15 bildet an seinem vom Klappgelenk 17 abgewandten Endbereich Teil einer als Ganzes mit 19 bezeichneten Parallelogrammführung, die, siehe insbesondere Fig. 4, zwei gleich ausgebildete Gelenkhebel 21 aufweist, die an ihren Hebelenden jeweils an strukturseitigen Parallelogramm-Schwenkachsen 23 und armlehnenseitigen Parallelogramm-Schwenkachsen 25 schwenkbar gelagert sind. Die strukturseitigen Schwenkachsen 23 verlaufen in einer gemeinsamen Horizontalebene und in Sitzlängsrichtung. Die armlehnenseitigen Schwenkachsen 25 verlaufen ebenfalls in gemeinsamer Horizontalebene parallel zu den strukturseitigen Schwenkachsen 23, wobei die armlehnenseitigen Schwenkachsen 25 gleiche Abstände voneinander aufweisen wie die strukturseitigen Schwenkachsen 23. Die strukturseitigen Schwenkachsen 23 befinden sich an einem Lagerteil 27 des festen Strukturelementes 5, während sich die armlehnenseitigen Schwenkachsen 25 an einem Endstück 29 des Armlehnenträgers 15 befinden, wobei im Endstück 29 eine nach unten offene Ausnehmung die oberen Endbereiche der Gelenkhebel 21 beweglich aufnimmt. Wie aus Fig. 4 zu ersehen ist, ist am unteren Randbereich des Endstückes 29 ein über den unteren Rand nach unten vorstehender Mitnehmerhebel 26 fest angebracht.

Fig. 4 zeigt die Parallelogrammführung 19 in dem der ersten Position der Armlehnen 13 entsprechenden Zustand, bei dem die Gelenkhebel 21, bei Blickrichtung entsprechend Fig. 4, aus der Vertikalposition entgegen dem Uhrzeigersinn nach links geneigt sind. Wie aus Fig. 4 deutlich zu ersehen ist, liegen die Gelenkhebel 21 bei der in Fig. 4 gezeigten Dimensionierung (Breite der Gelenkhebel 21) und den Achsabständen der Schwenkachsen 23 und 25 in der in Fig. 4 gezeigten Position jeweils seitlich aneinander an, so dass die Parallelogrammführung 19 gegen eine weitere Schwenkbewegung entgegen dem Uhrzeigersinn selbsthemmend ist.

Wird die in Fig. 4 gezeigte Armlehne 13 aus der ersten Position in die Auslöseposition überführt, wobei die Parallelogrammführung 19 nunmehr im Uhrzeigersinn geschwenkt wird, ergibt sich eine leicht bogenförmige Verschiebebewegung des Mitnehmerhebels 26 in Fig. 4 nach rechts.

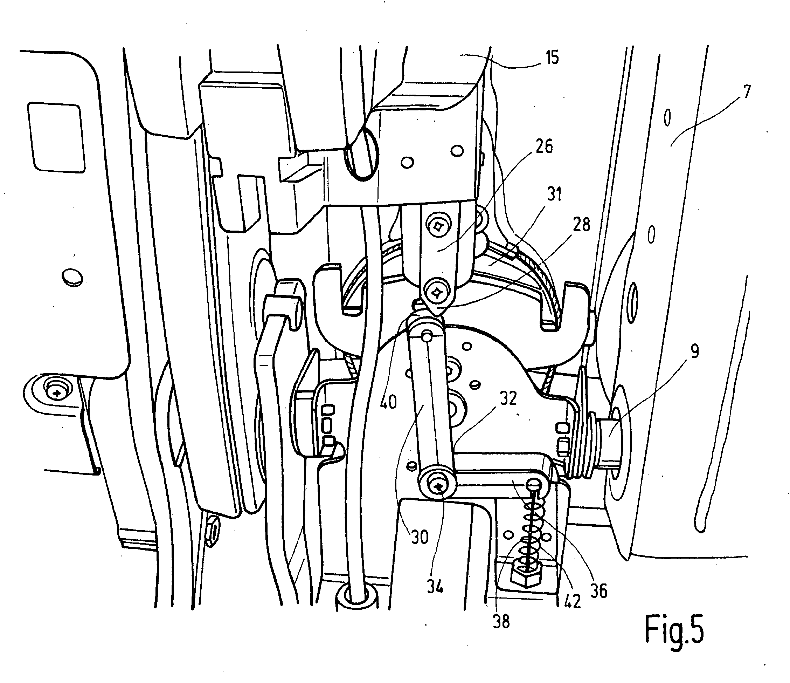

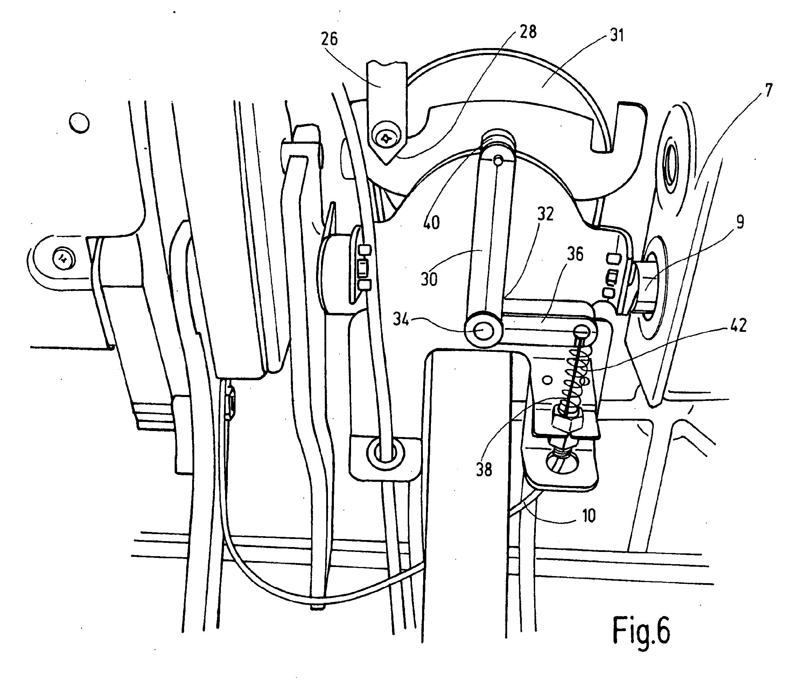

Die Fig. 5 und 6 sind im Gegensatz zu Fig. 3 und 4 keine Rückansichten, sondern Vorderansichten. D. h., dass bei einem Überführen der lageeinstellbaren Armlehne 13 aus der ersten Position in die Auslöseposition bei der Darstellung von Fig. 5 und 6 eine Verschiebebewegung des Mitnehmerhebels 26 in Fig. 5 und 6 von rechts nach links erfolgt. Fig. 5 zeigt einen Zustand, bei dem während der Einstellbewegung der Armlehne 13 zur Auslöseposition hin sich der Mitnehmerhebel 26 aus einer rechtsseitig gelegenen Ausgangsstellung zu einer etwa mittigen Zwischenstellung nach links bewegt hat. Fig. 6 zeigt den Zustand, bei dem die Armlehne 13 ihre Auslöseposition erreicht hat, wobei der Mitnehmerhebel 26 in seine linksseitige Endstellung verschoben ist.

Wie aus Fig. 5 und 6 deutlich entnehmbar ist, wirkt der Mitnehmerhebel 26 mit seinem mit Abschrägungen versehenen vorderen Endbereich 28 mit einem Hebelarm 30 eines Winkelhebels 32 zusammen, der bei 34 an einem strukturfesten Träger um eine in Sitzlängsrichtung verlaufende Achse schwenkbar gelagert ist. Mit seinem zweiten Hebelarm 36 ist der Winkelhebel 32 mit der Seele 38 des Bowdenzuges 10 verbunden. Der für die Betätigung durch den Mitnehmerhebel 26 vorgesehene Hebelarm 30 des Winkelhebels 32 weist am Hebelende eine Rolle 40 auf, an der der Mitnehmerhebel 26 mit seinem abgeschrägten Ende 28 bei der Verschiebebewegung anläuft, die sich durch die Lageeinstellung der Armlehne 13 ergibt. Fig. 5 zeigt, wie gesagt, einen Zwischenzustand, bei dem das Ende 28 des Mitnehmerhebels 26 die Rolle 40 kontaktiert und den Winkelhebel 32 entgegen dem Uhrzeigersinn geschwenkt hat. Die so erreichte Schwenkstellung des Winkelhebels 32, die über den Hebelarm 36 auf die Seele 38 des Bowdenzugs 10 übertragen wird, hat zur Folge, dass der Bowdenzug 10, als Zugglied wirkend, die Verriegelungseinrichtung 12 des Tischteiles 41 so ansteuert, dass das Riegelglied 2 gegen die Vorspannkraft der Feder 8 aus der Sperrstellung in die Freigabestellung zurückgezogen wird. Über das Hebelgetriebe 14 wird dadurch das Tischteil 41 aus der Verstaustellung heraus geschwenkt.

Fig. 6 zeigt den Zustand, bei dem die lageeinstellbare Armlehne 13 in der Auslöseposition ihre Endstellung erreicht hat, wobei sich der Mitnehmerhebel 26, nachdem er die Rolle 40 am Hebelarm 30 überlaufen hat, in seiner in Fig. 6 linksseitig gelegenen Endstellung befindet. Durch das so erfolgte Freigeben des Winkelhebels 32 kehrt das Riegelglied 2 selbsttätig in seine Sperrstellung zurück.

Bei der Sperrstellung hat der Winkelhebel 32 die in Fig. 6 gezeigte Mittellage, die durch eine der Vorspannkraft der Feder 8 entgegen wirkende, jedoch eine geringere Federwirkung erzeugende Druckfeder 42 nachgiebig festgelegt ist, die zwischen Hebelarm 36, und damit der Seele 38 des Bowdenzuges 10, und dessen Mantel eingespannt ist. Wird nun, indem die Armlehne 13 aus der Auslöseposition wieder in ihre erste Position überführt wird, der Mitnehmerhebel 26 aus der in Fig. 6 gezeigten linksseitigen Endstellung nach rechts verschoben, überläuft er wiederum die Rolle 40 am Hebelarm 30 des Winkelhebels 32, wobei dieser geringfügig im Uhrzeigersinn geschwenkt wird. Diese Schwenkbewegung erfolgt gegen die die Seele 38 des Bowdenzuges 10 straff haltende, eine geringe Federkraft aufweisende Druckfeder 42. Dadurch ist die aus Winkelhebel 32 und Mitnehmerhebel 26 gebildete Kupplungseinrichtung wieder in ihrem Ausgangszustand und bereit für eine nachfolgende Ansteuerung der Verriegelungseinrichtung 12 beim Überführen der lageeinstellbaren Armlehne 13 aus der ersten Position in die Auslöseposition.

Mittels einer getrieblichen Verbindung zwischen den Parallelogrammführungen 19 der lageeinstellbaren Armlehnen 13 führt eine Einstellbewegung einer Armlehne 13 zur entsprechenden Einstellbewegung der anderen Armlehne 13. Beim vorliegenden Beispiel ist an jeder Parallelogrammführung 19 ein seiltrommelartiger Koppelkörper 31 mit der Parallelogrammführung 19 so verbunden, dass der Koppelkörper 31 durch die Schwenkbewegungen der Parallelogrammführung 19 verdrehbar ist. Jeder Koppelkörper 31 weist beidseits des Drehzentrums der Schwenkbewegungen der Parallelogrammführung, und damit der Drehbewegung des Koppelkörpers 31, je eine Angriffsstelle für Zugglieder einer Seilzuganordnung auf. Die als getriebliche Verbindung vorgesehene Seilzuganordnung weist, wie dies bei der Koppeleinrichtung zur Ansteuerung der Verriegelungseinrichtung 12 der Fall ist, ebenfalls Bowdenzüge auf. Diese Bowdenzüge 37 und 39 sind zwischen den Koppelkörpern 31 beider Parallelogrammführungen 19 so geführt, dass eine Einstellbewegung einer Armlehne 13 zu einer synchronen Einstellbewegung der anderen Armlehne 13 führt, wobei der Koppelkörper 31 der jeweils anderen Armlehne um gleichen Drehwinkel, jedoch im entgegengesetzten Drehsinn, mit gedreht wird. In Verbindung mit der Koppeleinrichtung der erfindungsgemäßen Auslösevorrichtung wird dadurch erreicht, dass eine Einstellbewegung einer Armlehne 13 in die Auslöseposition sowohl die Sitzbreitenänderung beider Außensitze einer Dreiergruppe als auch die Ansteuerung der Verriegelungseinrichtung 12 des Tischteiles 41 bewirkt.

## Patentansprüche

1. Sitzsystem für Fahrzeuge zur Personenbeförderung, insbesondere für Luftfahrzeuge, in der Form einer Sitzreihe mit nebeneinander liegenden Sitzen, in der ein eine Rückenlehne (7) aufweisender mittlerer Sitz zwischen zwei weiteren Sitzen gelegen ist, mit einer lageeinstellbaren Armlehne (13), mit einem an der Rückenlehne (7) angebrachten Tischteil (41), das zwischen einer vom Anlehnbereich der Rückenlehne (7) entfernten Gebrauchsstellung, in der es eine zumindest näherungsweise horizontale Tischfläche (43) bildet, und einer am Anlehnbereich der Rückenlehne (7) gelegenen Verstaustellung ist, **gekennzeichnet durch** eine Verriegelungseinrichtung (12), wobei das Tischteil (41) **durch** die Verriegelungseinrichtung (12) in der Verstaustellung festgelegt und bei Ansteuerung der Verriegelungseinrichtung (12) in seine Gebrauchsstellung schwenkbar ist und die Verriegelungseinrichtung (12) **durch** die Einstellbewegung mindestens der Armlehne (13) ansteuerbar ist, um das Tischteil (41) zum Überführen in die Gebrauchsstellung freizugeben.

2. Sitzsystem nach Anspruch 1, **dadurch gekennzeichnet, dass** die Verriegelungseinrichtung (12) ein Riegelglied (2) aufweist, das zwischen Sperrstellung, in der es mit dem in Verstaustellung befindlichen Tischteil (41) verrastbar ist, und Freigabestellung bewegbar ist, dass eine Vorspanneinrichtung (8) vorgesehen ist, die das Riegelglied (2) für eine Bewegung in die Sperrstellung vorspannt, und dass eine Koppeleinrichtung (10, 26, 32) vorhanden ist, die die Bewegung der lageeinstellbaren Armlehne (13) bei deren Überführen in eine Auslöseposition in eine gegen die Vorspannung (8) erfolgende Bewegung des Riegelgliedes (2) in die Freigabestellung umsetzt.

3. Sitzsystem nach Anspruch 2, **dadurch gekennzeichnet, dass** die Koppeleinrichtung ein sich zwischen Verriegelungseinrichtung (12) und lageeinstellbarer Armlehne (13) erstreckendes Zugglied (10) aufweist, über das auf das Riegelglied (2) eine Zugkraft übertragbar ist, die dieses gegen die Vorspannung (8) aus der Sperrstellung in die Freigabestellung zieht.

4. Sitzsystem nach Anspruch 3, **dadurch gekennzeichnet, dass** als Zugglied ein Bowdenzug (10) vorgesehen ist.

5. Sitzsystem nach Anspruch 4, **dadurch gekennzeichnet, dass** zumindest eine zwischen Mantel und Seele (38) des Bowdenzuges (10) wirksame Federanordnung (8) die Vorspannkraft erzeugt, die das Riegelglied (2) der Verriegelungseinrichtung (12) normalerweise in die Sperrstellung steuert.

6. Sitzsystem nach Anspruch 5, **dadurch gekennzeichnet, dass** als Bestandteil der Koppeleinrichtung zwischen der Seele (38) des Bowdenzuges (10) und einem bei der Lageeinstellung der Armlehne (13) bewegten Träger (15) derselben eine Kupplungseinrichtung (26, 32) vorhanden ist.

7. Sitzsystem nach Anspruch 6, **dadurch gekennzeichnet, dass** die Kupplungseinrichtung einen bei der Lageeinstellung der Armlehne (13) geradlinig verschiebbaren Mitnehmer (26) und einen schwenkbaren Winkelhebel (32) aufweist, dessen einer Hebelarm (30) durch die Verschiebebewegung des Mitnehmers (26) schwenkbar ist und über dessen anderen Hebelarm (36) bei der durch den Mitnehmer (26) bewirkten Schwenkbewegung eine Zugkraft auf die Seele (38) des Bowdenzuges (10) übertragbar ist.

8. Sitzsystem nach Anspruch 7, **dadurch gekennzeichnet, dass** Mitnehmer (26) und zugeordneter Hebelarm (30) des Winkelhebels (32) in solcher Lagebeziehung zueinander angeordnet sind, dass der Mitnehmer (26) im Zuge seiner Verschiebebewegungen den Hebelarm (30) überläuft und diesen für eine vom Mitnehmer (26) unabhängige, durch die an der Seele (38) des Bowdenzuges (10) wirkende Vorspannung bewirkte Schwenkbewegung freigibt.

9. Sitzsystem nach Anspruch 8, **dadurch gekennzeichnet, dass** zwei an den mittleren Sitz angrenzende Armlehnen (13) zwischen einer ersten Position, die den drei nebeneinander liegenden Sitzen jeweils einander angeglichene Sitzbreiten zur Verfügung stellt, und einer Auslöseposition lageeinstellbar sind, in der diese Armlehnen (13) zur Vergrößerung der Sitzbreite der beiden außen liegenden Sitze aneinander angenähert sind, und dass die Verriegelungseinrichtung (12) in Abhängigkeit vom Überführen zumindest einer dieser Armlehnen (13) in die Auslöseposition ansteuerbar ist.

10. Sitzsystem nach Anspruch 9, **dadurch gekennzeichnet, dass** sich die lageeinstellbaren Armlehnen (13) in der Auslöseposition entlang der näherungsweise horizontalen Seitenränder des in der Gebrauchsstellung befindlichen Tischteiles (41) erstrecken.

11. Sitzsystem nach einem der Ansprüche 1 bis 10, **dadurch gekennzeichnet, dass** für das an der Sitzstruktur schwenkbar gelagerte Tischteil (41) ein Kraftantrieb (20) vorgesehen ist, der am Tischteil (41) eine Stellkraft erzeugt, die das in der Verstaustellung festgelegte Tischteil (41) bei Ansteuerung der Verriegelungseinrichtung (12) in Richtung auf die Gebrauchsstellung zu schwenken sucht.

## Claims

1. Seat system for passenger vehicles, in particular for aircrafts, in the form of a seat row having adjoining seats, in which seat row a middle seat which has a backrest (7) is situated between two further seats, having a position-adjustable armrest (13), having a table member (41) which is attached to the backrest (7) and is moveable between a use position, which is remote from the reclining region of the backrest (7) and in which it forms an at least approximately horizontal table surface (43), and a stowed position which is situated at the reclining region of the backrest (7), **characterized by** a locking device (12), the table member (41) being secured in the stowed position by the locking device (12) and being pivotable into its use position when the locking device (12) is activated, and the locking device (12) being able to be activated by the adjusting movement of at least the armrest (13) in order to release the table member (41) for transferring into the use position.

2. Seat system according to Claim 1, **characterized in that** the locking device (12) comprises a bolt member (2) which may be moved between a locked position in which it may be latched to the table member (41) located in the stowed position and a position of release, **in that** a pretensioning device (8) is provided which pretensions the bolt member (2) for movement into the locked position and **in that** a linking device (10, 26, 32) is present which converts the movement of the position-adjustable armrest (13), when it is transferred into a position of release, into a movement of the bolt member (2) carried out counter to the pretensioning (8) into the position of release.

3. Seat system according to Claim 2, **characterized in that** the linking device has a tension member (10) extending between the locking device (12) and the position-adjustable armrest (13), via which a tensile force may be transmitted to the bolt member (2), which pulls said bolt member counter to the pretensioning (8) from the locked position into the position of release.

4. Seat system according to Claim 3, **characterized in that** a Bowden cable (10) is provided as a tension member.

5. Seat system according to Claim 4, **characterized in that** at least one spring arrangement (8) acting between the cable housing and the inner cable (38) of the Bowden cable (10) generates the pretensioning force which actuates the bolt member (2) of the locking device (12) usually into the locked position.

6. Seat system according to Claim 5, **characterized in that** a coupling device (26, 32) is present as a component of the linking device between the inner cable (38) of the Bowden cable (10) and a support (15) of the armrest that is moved during the adjustment of the position of the armrest (13).

7. Seat system according to Claim 6, **characterized in that** the coupling device comprises a drive element (26) which may be displaced in a straight line during the adjustment of the position of the armrest (13), and comprises a pivotable angle lever (32), the one lever arm (30) thereof being pivotable by the displacement motion of the drive element (26) and, via the other lever arm (36) thereof, a tensile force being able to be transmitted to the inner cable (38) of the Bowden cable (10) during the pivoting movement carried out by the drive element (26).

8. Seat system according to Claim 7, **characterized in that** the relative positions of the drive element (26) and the associated lever arm (30) of the angle lever (32), are arranged in a relationship to one another such that the drive element (26) in the course of its displacement motion passes over the lever arm (30) and releases said lever arm for a pivoting movement independent of the drive element (26), effected by the pretensioning acting on the inner cable (38) of the Bowden cable (10).

9. Seat system according to Claim 8, **characterized in that** the position of two armrests (13) adjacent to the central seat may be adjusted between a first position which provides seat widths which are respectively the same as one another for the three adjacent seats and a position of release, in which these armrests (13) are brought closer to one another for increasing the seat width of the two outer seats and **in that** the locking device (12) may be activated depending on the transfer of at least one of these armrests (13) into the position of release.

10. Seat system according to Claim 9, **characterized in that** the position-adjustable armrests (13) in the position of release extend along the approximately horizontal side edges of the table member (41) located in the use position.

11. Seat system according to one of Claims 1 to 10, **characterized in that** for the table member (41) pivotably mounted on the seat structure, a mechanical drive (20) is provided, which generates an adjusting force on the table member (41), which tries to pivot the table member (41) that is secured in the stowed position in the direction of the use position, when activating the locking device (12).

## Revendications

1. Système de siège pour véhicules pour le transport de personne, en particulier pour des avions, en forme de rangée de sièges avec des sièges juxtaposés, dans laquelle un siège central comportant un dossier (7) est placé entre deux autres sièges, avec un accoudoir (13) à position ajustable, avec une partie de tablette (41) montée sur le dossier (7), qui peut être déplacée entre une position d'utilisation éloignée de la région d'appui contre le dossier (7), dans laquelle elle forme une surface de tablette (43) au moins approximativement horizontale, et une position de rangement située dans la région d'appui contre le dossier (7), **caractérisé par** un dispositif de verrouillage (12), la partie de tablette (41) étant fixée par le dispositif de verrouillage (12) dans la position de rangement et, lors de la commande du dispositif de verrouillage (12), pouvant être pivotée dans sa position d'utilisation, et le dispositif de verrouillage (12) pouvant être commandé par le mouvement d'ajustement d'au moins l'accoudoir (13), afin de libérer la partie de tablette (41) en vue de la transférer dans la position d'utilisation.

2. Système de siège selon la revendication 1, **caractérisé en ce que** le dispositif de verrouillage (12) présente un organe de verrou (2) qui peut être déplacé entre la position de blocage, dans laquelle il peut être encliqueté avec la partie de tablette (41) se trouvant dans la position de rangement, et la position de libération, **en ce qu'**un dispositif de précontrainte (8) est prévu, lequel précontraint l'organe de verrou (2) vers un mouvement dans la position de blocage, et **en ce qu'**un dispositif de couplage (10, 26, 32) est prévu, lequel convertit le mouvement de l'accoudoir (13) à position ajustable lors de son transfert dans une position de déclenchement en un mouvement de l'organe de verrou (2) s'effectuant à l'encontre de la précontrainte (8) dans la position de libération.

3. Système de siège selon la revendication 2, **caractérisé en ce que** le dispositif de couplage présente un organe de traction (10) s'étendant entre le dispositif de verrouillage (12) et l'accoudoir (13) à position ajustable, par le biais duquel une force de traction peut être transmise à l'organe de verrou (2), laquelle force de traction tire ce dernier à l'encontre de la précontrainte (8) de la position de blocage dans la position de libération.

4. Système de siège selon la revendication 3, **caractérisé en ce que** l'on prévoit comme organe de traction un câble Bowden (10).

5. Système de siège selon la revendication 4, **caractérisé en ce qu'**au moins un agencement de ressort (8) agissant entre la gaine et l'âme (38) du câble Bowden (10) produit la force de précontrainte qui commande l'organe de verrou (2) du dispositif de verrouillage (12) normalement dans la position de verrouillage.

6. Système de siège selon la revendication 5, **caractérisé en ce que** l'on prévoit, comme constituant du dispositif de couplage entre l'âme (38) du câble Bowden (10) et un support (15) de celle-ci déplacé lors de l'ajustement de la position de l'accoudoir (13), un dispositif d'accouplement (26, 32).

7. Système de siège selon la revendication 6, **caractérisé en ce que** le dispositif d'accouplement présente un dispositif d'entraînement (26) déplaçable en translation rectiligne lors de l'ajustement de la position de l'accoudoir (13) et un levier coudé pivotant (32), dont un bras de levier (30) peut pivoter sous l'effet du mouvement de translation du dispositif d'entraînement (26) et par le biais de l'autre bras de levier (36) duquel, lors du mouvement de pivotement provoqué par le dispositif d'entraînement (26), une force de traction peut être transmise à l'âme (38) du câble Bowden (10).

8. Système de siège selon la revendication 7, **caractérisé en ce que** le dispositif d'entraînement (26) et le bras de levier associé (30) du levier coudé (32) sont disposés dans un rapport de position l'un par rapport à l'autre de telle sorte que le dispositif d'entraînement (26), au cours de ses mouvements de translation, dépasse le bras de levier (30) et libère celui-ci en vue d'un mouvement de pivotement indépendant du dispositif d'entraînement (26), provoqué par la précontrainte agissant sur l'âme (38) du câble Bowden (10).

9. Système de siège selon la revendication 8, **caractérisé en ce que** deux accoudoirs (13) adjacents au siège central peuvent être ajustés en position entre une première position, qui fournit aux trois sièges juxtaposés à chaque fois des largeurs de siège comparables, et une position de déclenchement dans laquelle ces accoudoirs (13) sont rapprochés l'un de l'autre pour augmenter la largeur de siège des deux sièges extérieurs, et **en ce que** le dispositif de verrouillage (12) peut être commandé en fonction du transfert d'au moins l'un de ces accoudoirs (13) dans la position de déclenchement.

10. Système de siège selon la revendication 9, **caractérisé en ce que** les accoudoirs (13) à position ajustable s'étendent dans la position de déclenchement le long des bords latéraux approximativement horizontaux de la partie de tablette (41) se trouvant dans la position d'utilisation.

11. Système de siège selon l'une quelconque des revendications 1 à 10, **caractérisé en ce que** pour la partie de tablette (41) montée à pivotement sur la structure du siège, on prévoit un entraînement par force (20) qui produit sur la partie de tablette (41) une force de réglage qui a tendance à faire pivoter la partie de tablette (41) fixée dans la position de rangement dans la direction de la position d'utilisation lors de la commande du dispositif de verrouillage (12).
